# EUROPEAN PATENT SPECIFICATION

(11) **EP 1 730 440 B1**
(45) Date of publication and mention of the grant of the patent: **12.09.2007**
(21) Application number: 05718814.6
(22) Date of filing: 15.03.2005
(51) Int. Cl.: F21V 29/00, F21V 31/00, A01G 33/00, A01K 63/06

(54) **AN UNDERWATER LAMP**
UNTERWASSERLAMPE
LAMPE SOUS-MARINE

(30) Priority: 19.03.2004 IE 20040175
(43) Date of publication of application: 13.12.2006
(73) Proprietor: McFadden, John, Letterkenny - Co. Donegal (IE)
(72) Inventor: McFadden, John, Letterkenny - Co. Donegal (IE)
(74) Representative: Lane, Cathal Michael
(86) International application number: PCT/IE2005/000024
(87) International publication number: WO 2005/090860

(56) References cited:
- DE-U1- 20 312 760
- US-A- 2 839 673
- US-A- 4 984 862
- US-B1- 6 203 170

## Description

### Field of the Invention

The present invention relates to the field of underwater lighting technology. In particular the invention relates to a lighting device or lamp. Particularly of interest are underwater lamps suitable for the end-use application of fish farming or any application requiring such a device.

### Background to the Invention

Artificial lighting is used in fish farming. It promotes the growth of photosynthetic plants and organisms such as algae on which fish feed and are thus employed in fish farms for the purpose of promoting growth of photosynthetic plants and organisms for feeding fish.

To date lamps for underwater use in the fish farming area have experienced a high failure rate and require a good deal of maintenance. Certain current commercially available underwater lamps used for fish farming are based on metal halide technology such as a 400W bulb held in a glass capsule. Those lamps require a "strike voltage pulse" to ignite them. The strike voltage pulse is a term used to refer to the requirement for a sudden surge in voltage (usually of the order of 4.5KV) to initially ignite the bulbs. In general metal halide bulbs do not come to full brilliance immediately.

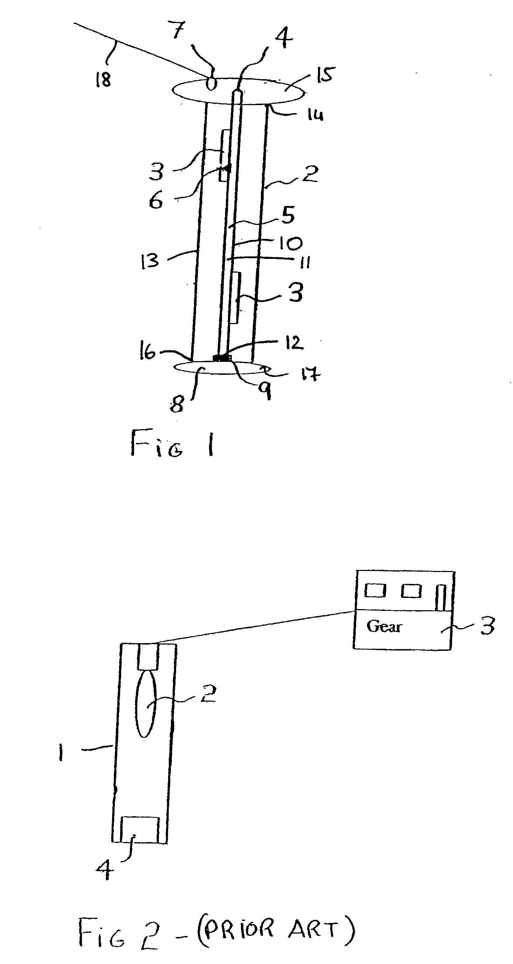

A typical prior art lamp construction is illustrated in Figure 2. for use in underwater applications. Figure 2 illustrates the underwater lamp currently found on the market. A lamp is provided wherein the lamp is a glass enclosure 1 housing a bulb. More specifically the bulbs used are metal halide bulbs 2. Said bulbs 2 require a large start up voltage to ignite them and therefore are only capable of operating at the larger voltage value of 220V. The voltages quoted may be assumed to be AC voltages. As a result of the requirement for a large start up voltage a choke capacitor and igniter is required. Both are housed in the "gear box" 3. In order for a sufficiently large voltage to reached the bulbs the "gear box" 3 must be positioned within 25 metres (cable length) of the lamp. The lamp further comprises a lead weight to maintain the lamp in a vertical position 4.

It should also be noted that any significant decrease in the voltage applied to a metal halide lamp will cause the bulb to stop emitting light and the light from the lamp will be lost. Due to the initial surge voltage requirements it may take 5-8 minutes to ignite the metal halide lamp again and restore the emitted light.

The voltage pulse tends to deteriorate the conductive cables etc. of the lamp thus subjecting the lighting equipment to undesirable wear and tear. This in turn shortens the lifespan of the equipment. This lighting equipment also tends to be expensive.

More specifically, the insulating material about the conductive wires within the cable tends to break down after a relatively short period of time. Typical cables employed are 1000V 1.5 mm three core cables wherein the 1.5 mm is the cross sectional area of the copper conductor.

In addition, in order to create this strike voltage pulse, the system requires a choke capacitor and igniter. Because of the inherent voltage drop along the transmission cable, it is not generally possible to locate the capacitor and igniter at a distance along the cable of more than 25 metres from the lamp, using existing technology. This generally means that a "gear box" holding the capacitor and igniter is placed close to the fish farming area in general proximate to or on a fish cage in which the fish are held. This is undesirable.

Furthermore the current metal halide lamps require an operational voltage of 220V AC, which means they are incompatible with mains voltages employed in certain countries, for example, in the US the preferred nominal voltage is set at 120V and allows a range of 114 - 126V. The nominal European voltage is now 230V however the use of 220V lamps on sites which are handled by employees are not normally permitted for safety reasons.

Use of lamps at voltages below and up to 110V are permitted on site as these voltages meet with safety requirements.

Generally, for safety reasons, it is desirable also to operate lamps in a fish farm at lower voltages. There is thus a requirement for lamps which operate on voltages less than 220V. For example a fish farm may require lamps which operate on 110V or less to meet safety requirements.

It is not a simple task however to step down the voltage to a lower level. The reason for operation at 220V is due to the strike voltage pulse requirement of metal halide bulbs. Without reaching that critical voltage the lamps may not ignite at all. The equipment required to operate a 110V lamp, or a lamp at a lower voltage, would be too bulky and expensive, that is if such a lamp existed.

A further problem with underwater lamps in general is that the heat produced causes a build-up of heat inside the lamp casing. As a result of this, the heat generated by the bulb(s) inside the lamp casing makes it extremely difficult to effectively seal the casing because of thermal expansion effects, which in turn may lead to small or larger amounts of water entering the lamp casing and damaging the bulbs.

US Patent 6,203,170 discloses an underwater lamp with an elongate watertight housing and LEDs.

US Patent No. 4,683,523 entitled "Deep Submersible Light Assembly" discloses an elongate metal cylindrical body attached to a socket. This lamp houses a quartz-halogen bulb and a focusing arrangement to focus the light in one general direction through a transparent lens cover. The lamp has a cylindrical heat sink screwed to the casing. It also has apertures in the transparent cover to allow ingress of water for pressure equalization purposes. Furthermore, a wattage of 1000W cannot be achieved by this lamp.

US Patent No. 4,219,871 entitled "High Intensity Navigation Light" discloses a light fixture capable of submersion to substantial depths. The bulb used in a tungsten halogen bulb housed in a glass globe and sealed to a heat-dissipating base. The heat-dissipating elements comprise internal and external fins. The internal fins collect heat from internally heated air while the external fins dissipate heat to surrounding air or water. Furthermore, a wattage of 1000W cannot be achieved by this lamp.

An alternative construction of submergible lamp is required which has an effective heat-dissipating means. In particular there is need for a lamp arrangement that dissipate the relatively high heat generated by halogen bulbs effectively. Furthermore, a need for submersible lamps generating a large operational wattage is required.

### Object of the Invention

It is an object of the present invention to provide an underwater light to overcome the above-mentioned problems of heat dissipation, surge voltage requirements and operational distance restriction which are imposed by cable voltage drop considerations.

It is a further objective of the present invention to provide an underwater lamp for use at operational voltages anywhere between 12V and 220V/110V ac or dc. Suitably the lamp should allow for the use of halogen bulbs (for example halogen tubes).

### Summary of the Invention

According to the present invention there is provided a lamp comprising a watertight housing having first and second ends and at least one sidewall. There is further provided at least one light source within the housing, arranged to emit light from the housing. Furthermore, the watertight housing comprises a port which allows the ingress of water when the lamp is submerged. Additionally, a heat-dissipating element having an elongate heat dissipating body extends into the housing. The function of the heat-dissipating element is to dissipate heat generated by the light source. The heat dissipating body has defined therein an internally located conduit. This internally located conduit is in fluid communication with the port in a watertight arrangement so that when the lamp is submerged water ingressing through the port flows internally into the heat dissipating body via the conduit so that the heat dissipating element is cooled by internally circulating water.

In one particular embodiment the heat-dissipating element terminates within the housing. The lamp comprises a heat dissipating body having defined therein an internally located conduit. This internally located conduit is in fluid communication with the port. The top closure of the lamp housing has a port that enables circulation of water into and out of the heat sink. In this embodiment the conduit terminates in a blind end. The conduit may possess an open top end and a sealed base. In this particular embodiment the heat-dissipating element is in fluid communication with only one port. The water enters the conduit via the port. For optimum dissipation of heat the heat-dissipating element is centered in said housing, but can be otherwise arranged.

Furthermore, the conduit of the heat-dissipating element may be in fluid communication with at least two ports in the housing so that water may enter or exit the heat-dissipating element through either port.

The heat-dissipating element may comprise an elongate hollow metal tube in fluid communication with at least one port in the housing. By means of both radiative and conductive transfer, the tube absorbs the heat generated by the bulbs. The tube may be of any suitable metal (including alloys) such as copper. Conductive transfer occurs as the bulbs are connected to the tube using heat conductive connectors. All absorbed heat is conducted through the pipe and transferred into the cooling water, assuming the lamp is submerged. The water may enter and exit the heat dissipating element (copper pipe) through the port (optionally within the closure,) thus creating the convection current which is necessary to sustain the cooling process.

In another embodiment the lamp comprises a watertight housing having first and second ends and at least one sidewall wherein the at least one sidewall is an endless sidewall. The preferred shape of the elongate watertight housing is a cylinder for uniform radiation of light in all directions. At least a portion of the sidewall of the watertight housing is constructed of transparent material. For optimum radiation all of the sidewalls should be transparent.

The lamp housing may comprise a unitary body which has a first open end and a closure for the open end. Alternatively, the lamp housing may comprise a unitary body which has first and second open ends and a closure for each open end.

In either embodiment of the lamp, the port may be provided in a or each closure. The port may be positioned in a closure at the base of the housing or may be positioned in a closure found at the top end of the housing or indeed may be positioned in both.

The closure may also carry at least one electrical connector for connecting an electrical cable from an external power source to the light source. The closure is removable from the housing to allow access to the light source within said housing. This permits the owner to access the inner housing for maintenance purposes. The closure at the base of the elongate watertight housing may comprise a mounting base. A mounting base enables the lamp to stand upright. The mounting base comprises an internal and an external face on which the lamp can stand.

The light source is mounted proximate to the heat-dissipating element. The light source is desirably connected to the heat-dissipating element by means of a heat conductive connector. The heat conductive connector may be a metal connector.

In another embodiment the lamp comprises at least one halogen bulb (as the light source). The preferred arrangement for employing halogen bulbs is hanging in a vertical sequence from the upper closure housing the port and electrical cables down to the base of the housing comprising the mounting base. More specifically the halogen bulbs/tubes used in the present invention may be 2x300W or 2x500W. The halogen tubes which are used which should be capable of operating at either 220V or 110V. However, the Halogen tubes used in the present invention are not limited to the 2x300W or 2x500W arrangements. The resulting output when using 2x500W bulbs is 1000W. A drop in voltage has no effect on this type of bulb and the distance of the electrical supply cables may be greatly extended. The light is not limited to the use of a cable of a maximum length of 25m. This is due to the use of one or more halogen bulbs.Due to the massive heat generated by them it is necessary to provide a more efficient heat-dissipating technique.

In order to assist retaining the lamp in a vertical position a ballast weight may be contained inside the watertight housing. The ballast weight may be mounted on an internal face of the mounting base. It is desirable that the lamp housing be vertically aligned to ensure optimum radiation of light and an effective flow of water within the heat-dissipating element. To achieve this, a balancing weight is suitably positioned on the mounting base of the lamp housing.

There are many advantages of the present invention. The underwater light of the present invention arrangement does not require a large surge in voltage in order to ignite the light source and therefore the distance of the cable may be extended beyond the 25 meters used in current underwater lamps for fish farms. More specifically the halogen bulbs/tubes used in the present invention are capable of operating at either 220V or 110V. Another advantage to the present invention is that the light source comes to full brilliance immediately and can be switched on or off as desired.

In one particular embodiment the heat-dissipating element takes the form of a hollow metal tube terminating at one end. The internal conduit of the hollow metal tube may terminate within the housing in this particular embodiment. After a short period of time following submersion, the water surrounding the lamp flows into the lamp to fill the hollow metal tube. The temperature of the water within the hollow metal tube rises with heat from the light source. The temperature of the water in the pipe increases and the heat from the heat-dissipating element is transferred to the (cold) water within the tube. This heated water in the tube undergoes convection and flows out of the hollow metal tube. Colder water surrounding the lamp is drawn into the hollow metal tube thus creating a convection current. Since the lamp housing is a small volume compared to the volume of the surrounding water e.g. seawater, the seawater acts as a large heat sink thus maintaining the lamp at safe operating temperatures.

The heat generated by the halogen tubes will be removed by means of a novel type of heat dissipating process as outlined in the appended claims. It is believed that the present invention overcomes the problem of unwanted heat generation in the lamp with the introduction of a water assisted heat-dissipating element. The present invention also provides a lamp with increased light radiation properties.

### Brief Description of the Drawings

These and other features of the present invention will be better understood with reference to the following drawings in which:
Figure 1 illustrates the lamp construction of the present invention.
Figure 2 illustrates a typical prior art lamp construction.

### Detailed description of the Drawings

Referring to the drawings and specifically to Figure 1 there is provided a lamp 1 comprising a watertight housing 2 which in the embodiment is elongate, having first and second ends and at least one sidewall. There exists at least one light source (in the embodiment two halogen bulbs) 3 positioned within the housing 2, arranged to emit light from the housing 2. The housing 2 comprises a port 4 to allow ingress of water when the lamp 1 is submerged. The heat-dissipating element 5 has an elongate heat dissipating body 10 extending into the housing 2 which dissipates the heat generated by the light sources 3. The heat-dissipating body10 has defined therein an internally located conduit 11. The conduit 11 is in fluid communication with the port 4 in a watertight arrangement so that when the lamp is submerged, water ingressing through the port 4 flows internally into the heat dissipating body 10 via the conduit 11 so that the heat-dissipating element 5 is cooled by internally circulating water.

Figure 1 further shows a lamp 1 wherein the heat-dissipating element 5 terminates within the housing 2. The heat-dissipating element 5 terminates within the housing 2 in this particular embodiment but the invention is not limited to such an arrangement. In this particular embodiment the conduit terminates in a blind end 12.

The conduit 11 of the heat-dissipating element 5 may be in fluid communication with at least two separate ports 4 (for example in opposing sides or ends) in the housing so that water may enter or exit the heat-dissipating element 5 through either port 4.

Water can flow into and out of the same port 4. In this particular arrangement the cold water flows into the heat-dissipating element 5. By means of both radiative and conductive transfer, the heat-dissipating element 5 absorbs the heat generated by the bulbs 3. Conductive transfer occurs as the bulbs 3 are connected directly to the heat-dissipating 5 element using heat conductive (metal) contacts 6. All absorbed heat is conducted through the heat-dissipating element and transferred into the cold water, (assuming the lamp 1 is submerged). The heated water then rises to the top of the heat-dissipating element 5 and flows out of the port 4.

Furthermore, the lamp in Figure 1 illustrates the heat-dissipating element 5 being centered in said housing 2. This allows for maximum dissipation of heat. The heat-dissipating element 5 comprises an elongate hollow metal tube in fluid communication with at least one port 4 in the housing. It is desirable that the heat-dissipating element is a straight pipe.

The construction of the lamp 1 is such that at least one sidewall is an endless sidewall 13. The lamp 1 is preferably is constructed such that at least one sidewall of the elongated watertight housing 2 is constructed of transparent material. This allows for optimum radiation of light.

A lamp 1 may be constructed so that the housing 2 comprises a unitary body which has a first open end 14 and a closure 15 for said open end. Alternatively, the lamp housing 2 may comprises a unitary body which has first 14 and second 16 open ends and a closure 15;17 for each open end. In the embodiment of lamp 1 shown the port 4 is provided in a closure (the closure 15).

The closure 15 carries at least one electrical connector 7 for connecting an electrical cable 18 from an external power source to the light source 3.

The closure 15 may be removable from the housing 2 to allow access to the light source 3 within said housing 2. Additionally the closure 17 at the base of the watertight housing may comprise a mounting base 8. The mounting base 8 comprises internal and external faces on which the lamp 1 can stand.

The light source 3 is mounted proximate to the heat-dissipating element 5. In the embodiment the light source 3 is connected to the heat-dissipating element by means of a heat conductive connector 6. The heat conductive connector 6 may take the form of a metal connector 6. Within the preferred embodiment the light source 3 comprises at least one halogen bulb.

Furthermore the watertight housing 2 is sealed to the mounting base 8. In order for the lamp 1 to remain vertically positioned a ballast weight 9 is provided. It is favorable to maintain the lamp 1 in a vertical position so as to permit maximum light radiation in all possible directions. The ballast weight 9 is contained within the watertight housing 2 and is mounted on the internal face of the mounting base 8.

It will be appreciated that when the lamp is in operation and the light source is ignited, the heat generated by light source is transferred to the heat-dissipating element or heat sink. The heat transfer occurs by both radiative and conductive means. When the lamp is submerged in water (for example seawater) the heat-dissipating element is at a higher temperature than the surrounding water.

Having described in detail a preferred embodiment of our deep submersible light assembly, it will be understood by those skilled in the art that our invention may be modified in both arrangement and detail. Therefore the protection afforded our invention should only be limited in accordance with the scope of the following claims.

## Claims

1. A lamp (1) comprising:
(i) an elongate watertight housing (2) having first and second ends and at least one sidewall (13);
(ii) at least one light source (3) within the housing (2) and arranged to emit light from the housing (2);
**characterized in that** it further comprises
(iii) a port (4) in the housing (2) to allow ingress of water when the lamp is submerged in water;
(iv) and a heat-dissipating element (5) having an elongate heat dissipating body (10) extending into the housing (2) to dissipate heat generated by the light source (3), the body having defined therein an internally located conduit (11) which is in fluid communication with the port (4) in a watertight arrangement so that when the lamp (1) is submerged, water ingressing through the port (4) flows internally into the heat dissipating body (10) via the conduit (4) so that the heat dissipating element (5) is cooled by internally circulating water.

2. A lamp as claimed in claim 1 wherein the heat-dissipating element (5) terminates within the housing (2).

3. A lamp as claimed in claim 2 wherein the conduit (11) terminates in a blind end (12).

4. A lamp as claimed in claim 1 wherein the conduit (11) of the heat-dissipating element (5) is in fluid communication with at least two ports (4) in the housing (2) so that water may enter or exit the heat-dissipating element through either port.

5. A lamp as claimed in any preceding claim wherein the heat-dissipating element (5) is centered in said housing (2).

6. A lamp as claimed in any preceding claim wherein said heat-dissipating element (5) comprises an elongate hollow metal tube in fluid communication with at least one port (4) in the housing (2).

7. A lamp as claimed in any preceding claim wherein the at least one sidewall (13) is an endless sidewall.

8. A lamp as claimed in any preceding claim wherein the at least one sidewall (13) of the elongated watertight housing (2) is constructed of transparent material.

9. A lamp according to any preceding claim wherein the housing (2) comprises:
(a) a unitary body which has a first open end (14); and
(b) a closure (15) for the open end.

10. A lamp according to any preceding claim wherein the housing (2) comprises:
(c) a unitary body which has first (14) and second (16) open ends; and
(d) a closure (15, 17) for each open end.

11. A lamp according to claim 9 or claim 10 wherein the port (4) is provided in a or each closure.

12. A lamp as claimed in claim 9 or claim 10 wherein a or each closure (15) carries at least one electrical connector (7) for connecting an electrical cable (18) from an external power source to the light source.

13. A lamp as claimed in any of claims 9 to 12 wherein a or each closure (15) is removable from the housing (2) to allow access to the light source (3) within said housing (2).

14. A lamp as claimed in any preceding claim wherein the closure (17) at the base of the elongate watertight housing comprises a mounting base (8).

15. A lamp as claimed in claim 14 wherein said mounting base (8) has internal and external sides and the lamp can stand on the external side.

16. A lamp as claimed in any preceding claim wherein the light source (3) is mounted proximate to the heat-dissipating element (5).

17. A lamp as claimed in claim 16 wherein the light source (3) is connected to the heat-dissipating element (5) by means of a heat conductive connector (6).

18. A lamp as claimed in claim 16 or claim 17 wherein the heat conductive connector (6) is a metal connector.

19. A lamp as claimed in any preceding claim wherein the light source (3) comprises at least one halogen bulb.

20. A lamp as claimed in any preceding claim wherein a ballast weight (9) is contained inside the watertight housing.

21. A lamp as claimed in claim 20 wherein the ballast weight (9) is arranged on or in the mounting base (8).

22. Use of a lamp according to any one of the preceding claims for the purpose of promoting growth of photosynthetic plants and organisms for feeding fish.

23. A fish farm comprising a lamp according to any one of claims 1 to 21.

## Patentansprüche

1. Eine Lampe (1), die Folgendes aufweist:
(i) ein langgestrecktes, wasserdichtes Gehäuse (2) mit ersten und zweiten Enden und mindestens einer Seitenwand (13);
(ii) mindestens eine Lichtquelle (3) innerhalb des Gehäuses (2) und angeordnet zur Emission von Licht vom Gehäuse (2); **dadurch gekennzeichnet, dass** ferner Folgendes vorgesehen ist:
(iii) ein Anschluss (4) im Gehäuse (2) um den Eintritt von Wasser dann zu gestatten, wenn die Lampe in Wasser untergetaucht ist;
(iv) und ein Wärmeverteilungselement (5) mit einem langgestreckten Wärmeverteilungskörper (10), der sich in das Gehäuse (2) erstreckt, um Wärme, erzeugt durch die Lichtquelle (3) zu verteilen, wobei der Körper eine intern angeordnete Leitung (11) aufweist, die in Strömungsmittelverbindung mit dem Anschluss in einer wasserdichten Anordnung derart steht, dass dann, wenn die Lampe (1) untergetaucht ist, durch den Anschluss (4) eintretendes Wasser intern in den Wärmeverteilungskörper (10) über die Leitung (11) derart fließt, dass das Wärmeverteilungselement (5) durch intern zirkulierendes Wasser gekühlt wird.

2. Lampe nach Anspruch 1, wobei das Wärmeverteilungselement (5) innerhalb des Gehäuses (2) endet.

3. Lampe nach Anspruch 2, wobei die Leitung (11) in einem Sackende (12) endet.

4. Lampe nach Anspruch 1, wobei die Leitung (11) des Wärmeverteilungselements (5) in Strömungsmittelverbindung mit mindestens zwei Anschlüssen (4) im Gehäuse (2) derart steht, dass Wasser in das Wärmeverteilungselement durch den einen oder anderen Anschluss eintreten oder den austreten kann.

5. Lampe nach irgendeinem der vorgehenden Ansprüche, wobei das Wärmeverteilungselement (5) in dem Gehäuse (2) zentriert ist.

6. Lampe nach irgendeinem der vorgehenden Ansprüche, wobei das Wärmeverteilungselement (5) ein langgestrecktes, hohles Metallrohr aufweist, und zwar in Strömungsmittelverbindung mit mindestens einem Anschluss (4) im Gehäuse (2).

7. Lampe nach irgendeinem der vorgehenden Ansprüche, wobei mindestens eine der Seitenwände (13) eine endlose Seitenwand ist.

8. Lampe nach irgendeinem der vorgehenden Ansprüche, wobei die mindestens eine Seitenwand (13) des langgestreckten, wasserdichten Gehäuses (2) aus transparentem Material aufgebaut ist.

9. Lampe nach irgendeinem der vorgehenden Ansprüche, wobei das Gehäuse (2) Folgendes aufweist:
a) einen einheitlichen Körper, der ein erstes offenes Ende (14) besitzt und
b) ein Verschluss (15) für das offene Ende.

10. Lampe nach irgendeinem der vorgehenden Ansprüche, wobei das Gehäuse (2) Folgendes aufweist:
c) einen einheitlichen Körper, der erste (14) und zweite (16) offene Enden besitzt; und
d) einen Verschluss (15, 17) für jedes offene Ende.

11. Lampe nach Anspruch 9 oder 10, wobei der Anschluss (4) in einem Verschluss oder in jedem Verschluss vorgesehen ist.

12. Lampe nach Anspruch 9 oder 10, wobei ein Verschluss (15) oder jeder Verschluss (15) mindestens einen elektrischen Verbinder (7) trägt, und zwar zur Verbindung eines elektrischen Kabels (18) von einer externen Leistungsquelle mit der Lichtquelle.

13. Lampe nach einem der Ansprüche 9 bis 12, wobei ein Verschluss (15) oder jeder Verschluss (15) vom Gehäuse (2) entfernbar ist, um Zugriff zur Lichtquelle (3) innerhalb des Gehäuses (2) zu gestatten.

14. Lampe nach einem der vorhergehenden Ansprüche, wobei der Verschluss (17) an der Basis des langgestreckten, wasserdichten Gehäuses eine Befestigungsbasis (8) aufweist.

15. Lampe nach Anspruch 14, wobei die Befestigungsbasis (8) interne und externe Seiten besitzt und wobei die Lampe auf der externen Seite stehen kann.

16. Lampe nach einem der vorhergehenden Ansprüche, wobei die Lichtquelle (3) nahe dem Wärmeverteilungselement (5) angeordnet ist.

17. Lampe nach Anspruch 16, wobei die Lichtquelle (3) mit dem Wärmeverteilungselement (5) mittels eines wärmeleitenden Verbinders (6) verbunden ist.

18. Lampe nach Anspruch 16 oder 17, wobei der wärmeleitende Verbinder (6) ein Metallverbinder ist.

19. Lampe nach einem der vorhergehenden Ansprüche, wobei die Lichtquelle (3) mindestens eine Wasserstoffbirne aufweist.

20. Lampe nach einem der vorhergehenden Ansprüche, wobei ein Ballastgewicht (9) innerhalb des wasserdichten Gehäuses vorgesehen ist.

21. Lampe nach Anspruch 20, wobei das Ballastgewicht (9) auf oder in der Befestigungsbasis (8) angeordnet ist.

22. Verwendung einer Lampe gemäß einem der vorhergehenden Ansprüche für die Zwecke des Förderns des Wachstums von photosynthetischen Pflanzen und Organismen zum Füttern von Fischen.

23. Eine Fischfarm, die eine Lampe gemäß einem der Ansprüche 1 bis 21 aufweist.

## Revendications

1. Lampe (1) comprenant :
i) un boîtier étanche allongé (2) ayant des première et seconde extrémités et au moins une paroi latérale (13) ;
ii) au moins une source lumineuse (3) dans le boîtier (2) disposé pour émettre de la lumière à partir du boîtier (2) ;
**caractérisée en ce qu'**elle comprend en outre :
iii) un accès (4) dans le boîtier (2) pour permettre l'entrée d'eau quand la lampe est immergée dans l'eau ; et
iv) un élément dissipateur de chaleur (5) comprenant un corps allongé dissipateur de chaleur (10) s'étendant dans le boîtier (2) pour dissiper la chaleur produite par la source lumineuse (3), le corps contenant un conduit interne (11) en communication avec l'accès (4) de façon étanche de sorte que, quand la lampe (1) est immergée, l'entrée d'eau dans l'accès (4) s'écoule de façon interne dans le corps dissipant la chaleur (10) par l'intermédiaire du conduit (11) de sorte que l'élément dissipateur de chaleur (5) est refroidi par l'eau circulant de façon interne.

2. Lampe selon la revendication 1, dans laquelle l'élément dissipateur de chaleur (5) se termine dans le boîtier (2).

3. Lampe selon la revendication 2, dans laquelle le conduit (11) se termine par une extrémité aveugle (12).

4. Lampe selon la revendication 1, dans laquelle le conduit (11) de l'élément dissipateur de chaleur (5) est en communication avec au moins deux accès (4) dans le boîtier (2) de sorte que de l'eau peut entrer ou sortir de l'élément dissipateur de chaleur par l'un ou l'autre accès.

5. Lampe selon l'une quelconque des revendications précédentes, dans laquelle l'élément dissipateur de chaleur (5) est centré dans le boîtier (2).

6. Lampe selon l'une quelconque des revendications précédentes, dans laquelle l'élément dissipateur de chaleur (5) comprend un tube métallique creux allongé en communication avec au moins un accès (4) du boîtier (2).

7. Lampe selon l'une quelconque des revendications précédentes, dans laquelle ladite au moins une paroi latérale (13) est une paroi sans fin.

8. Lampe selon l'une quelconque des revendications précédentes, dans laquelle ladite au moins une paroi latérale (13) du boîtier étanche allongé (2) est en un matériau transparent.

9. Lampe selon l'une quelconque des revendications précédentes, dans laquelle le boîtier (2) comprend :
a) un corps d'une seule pièce ayant une extrémité ouverte (14) ; et
b) une fermeture (15) pour l'extrémité ouverte.

10. Lampe selon l'une quelconque des revendications précédentes, dans laquelle le boîtier (2) comprend :
c) un corps unitaire qui a des première (14) et seconde (16) extrémités ouvertes ; et
d) une fermeture (15, 17) pour chaque extrémité ouverte.

11. Lampe selon la revendication 9 ou 10, dans laquelle l'accès (4) est prévu dans l'une des fermetures ou dans chacune d'entre elles.

12. Lampe selon la revendication 9 ou 10, dans laquelle une ou chacune des fermetures (15) porte au moins un connecteur électrique (7) pour connecter un câble électrique (18) à partir d'une source d'alimentation externe vers la source lumineuse.

13. Lampe selon l'une quelconque des revendications 9 à 12, dans laquelle la ou chacune des fermetures (15) est amovible par rapport au boîtier (2) pour permettre un accès à la source lumineuse (3) dans le boîtier (2).

14. Lampe selon l'une quelconque des revendications précédentes, dans laquelle la fermeture (17) à la base du boîtier étanche allongé comprend une embase de montage (8).

15. Lampe selon la revendication 14, dans laquelle l'embase de montage (8) a des côtés interne et externe et la lampe peut reposer sur le côté externe.

16. Lampe selon l'une quelconque des revendications précédentes, dans laquelle la source lumineuse (3) est montée près de l'élément dissipateur de chaleur (5).

17. Lampe selon la revendication 16, dans laquelle la source lumineuse (3) est reliée à l'élément dissipateur de chaleur (5) par un connecteur conducteur de la chaleur (6).

18. Lampe selon la revendication 16 ou 17, dans laquelle le connecteur conducteur de la chaleur (6) est un connecteur métallique.

19. Lampe selon l'une quelconque des revendications précédentes, dans laquelle la source lumineuse (3) comprend au moins une lampe halogène.

20. Lampe selon l'une quelconque des revendications précédentes, dans laquelle un ballast (9) est contenu dans le boîtier étanche.

21. Lampe selon la revendication 20, dans laquelle le ballast (9) est disposé sur l'embase de montage (8).

22. Utilisation d'une lampe selon l'une quelconque des revendications précédentes pour promouvoir la croissance de plantes et d'organismes de photosynthèse pour nourrir les poissons.

23. Ferme piscicole contenant une lampe selon l'une quelconque des revendications 1 à 21.
